(19)

**Europäisches Patentamt**

**European Patent Office**

**Office européen des brevets**

(11) **EP 3 620 275 B1**

(12) **EUROPEAN PATENT SPECIFICATION**

(45) Date of publication and mention
of the grant of the patent:
**21.08.2024 Bulletin 2024/34**

(21) Application number: **18192538.9**

(22) Date of filing: **04.09.2018**

(51) International Patent Classification (IPC):
**B25J 15/06** *(2006.01)* **B66C 1/08** *(2006.01)*
**B65G 47/92** *(2006.01)* **H01F 13/00** *(2006.01)*

(52) Cooperative Patent Classification (CPC):
**B25J 15/0608; B65G 47/92; B66C 1/08;
H01F 13/006**

(54) **A DEVICE FOR PICKING ARTICLES AND A METHOD FOR DEMAGNETIZING THE ARTICLES**

VORRICHTUNG ZUM KOMMISSIONIEREN VON ARTIKELN UND VERFAHREN ZUM ENTMAGNETISIEREN DER ARTIKEL

DISPOSITIF PERMETTANT DE SAISIR DES ARTICLES ET PROCÉDÉ PERMETTANT DE DÉMAGNÉTISER LES ARTICLES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**11.03.2020 Bulletin 2020/11**

(73) Proprietor: **NLT Automation GmbH
26506 Norden (DE)**

(72) Inventors:
• **Andersson, Johnny
619 32 Trosa (SE)**
• **Slettenmark, Bruno
175 69 Järfälla (SE)**

(74) Representative: **Siekmann, Gunnar
Jabbusch Siekmann & Wasiljeff
Patentanwälte
Hauptstrasse 85
26131 Oldenburg (DE)**

(56) References cited:
**EP-A1- 2 193 890    JP-A- H1 111 850
JP-B1- 5 156 898**

• **VOJNOVIC ET AL: "A magnetic pick-up and release system for moving lightweight samples",** 18 September 2011 (2011-09-18), XP055552447, Retrieved from the Internet <URL:http://users.ox.ac.uk/~atdgroup/technical notes/A%20magnetic%20pick-up%20and%20rel ease%20system%20for%20moving%20lightwei ght%20samples.pdf> [retrieved on 20190206]

## Description

Technical field

The present invention relates to a device for picking slitting tools such as cutting rings and spacers, wherein the device comprises an electromagnet arranged to generate a magnetic field for attracting one of the slitting tools during picking of the slitting tool, and a control unit configured to control a magnetizing current supplied to the electromagnet. The invention also relates to a method for controlling the device.

Background

In case of industrial manufacturing, articles, such as finished products, product parts, semimanufactured products, and/or tools, must often be fetched from a storage, an intermediate storage or a machine, for example when assembling the product. The manufacturing is usually facilitated if the article can be fetched automatically. In particular, the manufacture is facilitated if the articles are fetched by an industrial robot. This since industrial robots have very broad areas of application and can deliver the articles to a desired location and/or control the continued machining or use of the article. Such articles are usually at least partially manufactured in a magnetizable material, for example iron or a ferrous material.

One area in which fetching of articles is very important is when slitting master coils into customized narrow strips. The coils are slitted by steel cutters in the form of cutting rings made of steel arranged at fixed distances from each other by spacers in a slitting line. The distances between the cutting rings determine the width of the strips. The thickness of the slitting tools varies. The thickness of the slitting tools is usually varying between 1 - 100 mm. The cutting rings and the spacers are stored on a number of holding members, each storing one size of slitting tools.

WO2004098839 discloses a device for picking slitting tools including an industrial robot holding a gripping unit. The gripping unit includes an electromagnet generating a magnetic field attracting the slitting tool during picking of the slitting tool. The gripping unit is arranged for attracting the slitting tools to the electromagnet and then to hold the slitting tool during the time the robot moves the slitting tool to a storage magazine or to some other position. A control unit supplies a direct current (DC) to the electromagnet during picking of the slitting tool. A problem with such gripping unit is that sometimes the slitting tools remain magnetized even after that the slitting tools have been fetched, which magnetism may disturb subsequent processing steps. Further, the remaining magnetism causes an attraction between the slitting tools, so that it can be difficult to pick them.

EP2193890 discloses a device for picking slitting tools including a magnetizable material. The device comprises an electromagnet arranged to generate a magnetic field for attracting one of the slitting tools during picking of the slitting tool and a control unit configured to control a magnetizing current supplied to the electromagnet. The control unit is configured to generate an alternating current to the electromagnet so that the electromagnet generates a variable magnetic field adapted to demagnetize and make it possible to detach the slitting tool from the electromagnet, and the device further comprises an article holder arranged to take hold of the slitting tool and to move the detached slitting tool away from the electromagnet during generation of the alternating current and accordingly during demagnetizing of the cutting ring. The device also comprises a robot arranged to move the picked slitting tool between a storing place for the slitting tools and an interim station and vice versa, or to some other position.

The picking device comprises a gripping unit arranged for attracting the slitting tool to the picking device and then to hold the slitting tool when the robot moves the slitting tool to an interim station, or to some other position. The gripping unit comprises an article holder arranged to take hold of a slitting tool and to move a detached slitting tool away from the electromagnet. The article holder is arranged linearly movable relative the electromagnet along an axis through a centre hole of the electromagnet. The article holder comprises a chuck for taking hold of the slitting tool. The chuck is arranged retractable and can be opened when a slitting tool is to be taken hold of. The chuck has three legs arranged in Y-form so that the legs extend radially outward from a centre-point of the chuck and arranged so that their lengths in a radial direction can be changed, and thereby the gripping diameter of the chuck can be varied. The outer ends of the legs are adapted to fit in a centre hole of a slitting tool. The article holder further comprises linear moving unit comprising an elongated beam fixedly connected to the chuck and arranged movable along a track that is fixedly connected relative to the electromagnet. A problem with the demagnetization procedure described in the patent is that the demagnetization does not always work satisfactorily, and it happens that the slitting tools are not fully demagnetized after the demagnetization has been completed. Sometimes, the remaining magnetism of the slitting tools is so large that the article holder will have problem to take hold of the slitting tool in a correct way.

The article holder must be able to adjust the position of the slitting tool in relation to the chuck upon taking hold of the slitting tool to achieve a correct positioning of the slitting tool when it is left to the interim station, or to some other position. If the position of the slitting tool cannot be adjusted upon taking hold of the slitting tool, due to the attracting magnetic forces between the electromagnet and the slitting tool, this may cause mechanical forces on the beam, which may lead to bending of the beam and damage on the linear moving unit. Further, if the slitting tool is not centred relative the chuck, it may cause problem when the slitting tool is to be left to the interim station, or some other position.

In most cases, around 50 cycles are required to achieve a complete demagnetizing of the electromagnet and slitting tool. This will increase the robot's working cycle with about 5 seconds. However, it is a desire to have as short robot working cycle as possible. A complete demagnetization of the electromagnet and the slitting tools is important to avoid slitting tools to cling together and the surface of the electromagnet to attract ferroparticles.

Summary

One aim of the invention is to improve the demagnetization of the electromagnet and the slitting tools. Another aim is to reduce the impact on the robot working cycle due to the time length of the demagnetizing process.

According to an aspect of the invention, this aim is achieved by a device for picking slitting tools as defined in claim 1.

The device comprises a robot arranged movable between a first place and a second place, and a gripping unit mounted on the robot and adapted to pick a slitting tool at the first place and to leave the slitting tool at the second place, wherein the robot is arranged to move the gripping unit holding the slitting tool to the second place and to move the empty gripping tool back to the first place, and wherein the gripping unit includes an electromagnet having a coil arranged to generate a magnetic field, and a current supply unit configured to feed the coil with a magnetizing pulse to generate a magnetic field for attracting the slitting tools during picking of the slitting tools and to generate a first variable magnetic field for demagnetizing the slitting tool and the electromagnet when the slitting tool is attached to the electromagnet. The current supply unit is configured to feed the coil with a first train of current pulses with changing polarity and generally gradually decreasing amplitude to generate the first variable magnetic field for demagnetizing the slitting ring and the electromagnet. A first current pulse in the first train has a polarity opposite to the polarity of the magnetizing pulse. The current supply unit is configured to feed the coil with a second train of current pulses with changing polarity and generally gradually decreasing amplitude to generate a second variable magnetic field for demagnetization of the electromagnet after the slitting tool has been removed from the gripping unit and left at the second place, and while the robot is moving the empty gripping unit back to the first place.

With "generally gradually decreasing amplitude" is meant that the general trend of the amplitudes of the pulses is decreasing. A plurality of pulses in the train has an amplitude that is lower than the amplitude of the preceding current pulse. Preferably, the amplitude of each of the following current pulses in the first train is equal or lower than the amplitude of the preceding current pulse, and most preferably, the amplitude of each of the following current pulses in the train is lower than the amplitude of the preceding current pulse in order to reduce time for the demagnetizing, and accordingly the total working cycle time. However, an efficient demagnetizing can be achieved even though one or a few of the current pulses is slightly larger than the preceding current pulse.

Due to the fact that the first current pulse has a polarity opposite to the polarity of the magnetizing pulse, and the variable magnetic field has a generally decreasing amplitude an improved demagnetization of the electromagnet and the slitting tool is achieved. Thus, the time for the demagnetization of the slitting tool is reduced compared to in the prior art, and accordingly the robot's working cycle is reduced.

The invention makes it possible to achieve a complete demagnetizing of the picked slitting tool and the gripping unit with only about 1 s impact on the robot's working cycle.

The electromagnet is magnetized by a current through the coil of the electromagnet. When the electromagnet comes close to the slitting tool to be picked, the slitting tool is attracted and then held by a strong magnetic force by the electromagnet. In order to release the slitting tool, a first demagnetization process is performed, and the slitting tool is detached from the electromagnet. It is important to achieve a complete demagnetization of the slitting tool before leaving the slitting tool to avoid that the slitting tools cling together and to avoid attracting ferroparticles.

During a first rather short demagnetization process, the slitting tool is completely demagnetized or at least nearly completely demagnetized, and the electromagnet is at least partly demagnetized. Most of the remanent magnetization of the electromagnet is removed by the first demagnetization process, but there may be some small remanence left. How much will, among other factors, depend on the design and length of the demagnetization process.

[*Insert passage from pages 5 and 6*]

< >

According to an embodiment of the invention, the first current pulse in the first train has substantially the same amplitude as the magnetizing pulse. Suitably, the amplitude of the first current pulse in the first train differs less than 20% from the amplitude of the magnetizing pulse. Due to the fact that the first current pulse has an amplitude similar to the earlier magnetizing pulse, the demagnetization of the electromagnet and the slitting tool is further improved, and accordingly the robot's working cycle is further reduced.

According to an embodiment of the invention, the amplitude of the last pulse in the first train of current pulses is at least 20 % lower than the amplitude of the first pulse in the first train. Preferably the amplitude of the last pulse in the first train of current pulses is at least 10 % lower than the amplitude of the first pulse in the first train, and most preferably the amplitude of the last pulse in the first train of current pulses is at least 5 % lower than the amplitude of the first pulse in the first train. The lower amplitude of the last pulse in the pulse train, the more efficient demagnetizing is achieved.

Preferably, the width of the magnetizing pulse is at least 50 ms in order to overcome the skin effect due to eddy currents of the electromagnet. If the tool is an unlaminated iron tool, the width of the magnetizing pulse preferably is at least 100 ms in order to overcome the skin effect of the electromagnet. The width of the pulse is measured between two zero crossings. According to an embodiment of the invention, the width of the current pulses in the train is at least 50 ms. If the tool is an unlaminated iron tool, the width of the current pulses in the train preferably is at least 100 ms in order to overcome the skin effect of the electromagnet. Suitably, the width of the magnetizing pulse and current pulses in the pulse train is substantially the same.

According to an embodiment of the invention, and the current supply unit is configured to feed the coil with a current corresponding to at least 15 At, preferably between 15 and 1500 At, and most preferably between 75 and 750 At, during generation of the magnetizing pulse. Thus, a sufficient magnetization of the electromagnet is achieved to attract the slitting tools. According to an embodiment of the invention, the current supply unit is configured to feed the coil with a current corresponding to at least 15 At, preferably between 15 and 1500 At, and most preferably between 75 and 750 At, during generation of the the first current pulse in the first train. Preferably, the amplitude of the magnetization pulse and the first pulse in the pulse train during the demagnetizing is substantially the same to achieve an efficient demagnetizing process.

The current fed to the coil generates a magnetomotive force MMF in the coil. The unit of the magnetomotive force is ampere turns (At) and is the product of the number of turns N in a coil and the current I in amperes: $MMF = N \times I$.

According to an embodiment of the invention, the amplitude of the following pulses in the first train is between 5 and 50% lower than the amplitude of the preceding pulse, and preferably between 10 - 30% lower than the amplitude of the preceding pulse. Thus, the length of the pulse train is kept low and accordingly the time for the first demagnetization is short. An efficient demagnetizing is achieved while the time for the first demagnetization is kept short so that the robot's working cycle is reduced.

According to an embodiment of the invention, the number of pulses in the first train is less than 30, and preferably less than 20. By reducing the number of pulses in the first pulse, the time of the first demagnetization is kept short so that the robot's working cycle is reduced. Suitably, the number of pulses in the first train is at least 4, and preferably at least 8. The number of pulses in the first pulse train is chosen so that a complete or nearly complete demagnetizing of the electromagnet and the slitting tool is achieved.

According to an embodiment of the invention, the gripping unit comprises an article holder arranged to take hold of the slitting tool and to move the detached slitting tool away from the electromagnet, and the article holder is arranged to take hold of the slitting tool during generation of the first pulse train. Thus, the slitting tool is prevented from falling off the gripping unit when it is detached due to the demagnetization. Further, the robot's working cycle is reduced. Preferably, the article holder is arranged to take hold of the slitting tool during a last part of the pulse train so that the slitting tool is loose enough to allow the chuck to center the slitting tool. The term "the article holder takes hold of the slitting tool" means that the article holder grasps the slitting tool.

[*insert the following passage into page 4*

< The first demagnetization is carried out when the slitting tool is attached to the electromagnet and the second demagnetization is carried out when the slitting tool has been removed from the electromagnet. The first demagnetizing is kept short to save cycle time, but it should be long enough to achieve a complete or at least nearly complete demagnetized of the slitting tool. During the second demagnetization, the remaining magnetism of the electromagnet is removed, and so that the electromagnet is completely demagnetized. The second demagnetization is carried out after the slitting tool has been removed from the gripping unit, and during the robot movement of the gripping unit and before the next part of the robot working cycle. Thus, the second demagnetization will not affect the time length of the robot working cycle.

Further, if the slitting tool is not in perfect contact all over the surface of the electromagnet during the entire first demagnetizing, one does not get a perfect demagnetizing of the electromagnet even if the number of cycles is large. This happens when the slitting tool is not perfectly flat. The slitting tool will flex during the strong magnetic holding force and conform to the surface of the electromagnet but may spring back in the middle of the magnetization cycle and loose contact in some areas. Remaining magnetism in the electromagnet may attract small metal particles, which will be positioned between the slitting tool and the surface of the electromagnet when the gripping unit has picked the next slitting tool, and it may affect the positioning of the slitting tools. Due to the fact that the second magnetization is carried out when the slitting tool has been removed from the gripping unit, the magnetic circuit has a very uniform large airgap, and accordingly the magnetic reluctance is exactly equal along the whole perimeter of the electromagnet. This means that the magnetic flux produced by current through the coil will be exactly evenly distributed over the whole perimeter. Thus, it is possible to completely demagnetize the electromagnet evenly along the complete perimeter during the second demagnetization. The second demagnetization cycle can be considerably longer than the first demagnetization process if desire, since it will not influence the robot working cycle.

Suitably, the second pulse train has approximately the same parameters as the first pulse train. For example, the width of the pulses in the second train is at least 50 ms. Further, the current supply unit is configured to feed the coil with a current corresponding to at least 15 At, preferably between 15 and 1500 At, and most preferably between 75 and 750 At during generation of the first pulse in the second train.

Suitably, the amplitude of the first current pulse in the second train differs less than 20% from the amplitude of the magnetizing pulse.

According to an embodiment of the invention, the number of pulses in the second train is at least 10, and preferably at least 15. Suitably, the number of pulses in the second train is less than 30. Due to the fact that the magnetization is carried out after the slitting tool has been removed from the gripping unit, less pulses is needed to achieve a complete demagnetization of the electromagnet. > [*insert the preceding passage into page 4*]

According to another aspect of the invention, the aim is achieved by a method as defined in claim 9.

The method comprises:

- feeding the coil with at least one magnetizing pulse to generate a magnetic field for attracting a slitting tool,
- picking the slitting tool at a first place using the gripping unit, and
- feeding the coil with a train of current pulses with changing polarity and generally gradually decreasing amplitude to generate a first variable magnetic field for demagnetizing the slitting tool and the electromagnet, when the slitting too is attached to the electromagnet, wherein a first current pulse in the first train has a polarity opposite to the polarity of the magnetizing pulse,
- moving the slitting tool to a second place,
- removing the slitting tool from the gripping unit,
- leaving the slitting tool at the second place,
- feeding the coil with a second train of current pulses with changing polarity and generally gradually decreasing amplitude to generate a second variable magnetic field for demagnetizing the electromagnet after the slitting tool has been removed from the gripping unit and left at the second place and while moving the empty gripping unit back to the first place.

According to an embodiment of the invention, the width of the current pulses in the first train is at least 50 ms.

According to an embodiment of the invention, the coil is fed with a current corresponding to at least 15 At during generation of the magnetizing pulse and the first pulse in the first train, preferably between 15 and 1500 At, and most preferably between 75 and 750 At.

According to an embodiment of the invention, the amplitude of the following current pulses in the first train is equal or lower than the amplitude of the preceding current pulse.

According to an embodiment of the invention, the method comprises feeding the electromagnet with the second train of current pulses while the article holder moves the detached slitting tool away from the electromagnet. Thus, the second demagnetization process is carried out while the article holder moves the detached slitting tool to an interim station or turnstile.

According to an embodiment of the invention, the method comprises feeding the electromagnet with the second train of current pulses after the slitting tool has been removed from the gripping unit, and while moving the empty gripping unit to the next slitting tool to be picked. Thus, the second demagnetization process is carried out after the article holder has left the slitting tool to an interim station or turnstile, and while the gripping unit is moved empty to the slitting tool storage where the next slitting tool is to be picked.

According to an embodiment of the invention, the width of the current pulses in the second train is at least 50 ms, and preferably at least 100 ms.

According to an embodiment of the invention, the gripping unit comprises an article holder arranged to take hold of the slitting tool and to move the detached slitting tool away from the electromagnet, and the method comprises taking hold of the slitting tool during generation of the first train of current pulses.

According to an embodiment of the invention, the amplitude of the first current pulse in the first train differs less than 20% from the amplitude of the magnetizing pulse.

According to an embodiment of the invention, the amplitude of the following pulses in the first train is between 5 and 50% lower than the amplitude of the preceding pulse, and preferably between 10 - 30% lower than the amplitude of the preceding pulse.

Brief description of the drawings

The invention will now be explained more closely by the description of different embodiments of the invention and with reference to the appended figures.

Fig. 1 shows an example of a device for picking slitting tools including a gripping unit.
Fig. 2 shows the gripping unit in an enlarged view.
Fig. 3a shows a perspective view of an example of an electromagnet arranged to generate a magnetic field for attracting a slitting tool.
Fig. 3b shows a cross-section A-A through the electromagnet shown in figure 3a. Fig. 3c shows a cross-section B-B through the electromagnet shown in figure 3b.
Figs. 4a - 4f show a sequence of steps during picking of a slitting tool and subsequent demagnetizing of the slitting tool.

Fig. 5 shows an example of a control unit for controlling the demagnetization of the electromagnet and the slitting tools.

Fig. 6 shows an example of the current, and accordingly the resulting number of ampere turns, generated by the control unit during picking and demagnetizing of a slitting tool and the electromagnet according to an embodiment of the invention.

Fig. 7 shows another example of the current, and accordingly the resulting number of ampere turns, generated by the control unit during picking and demagnetizing of a slitting tool and the electromagnet according to another embodiment of the invention.

Detailed description

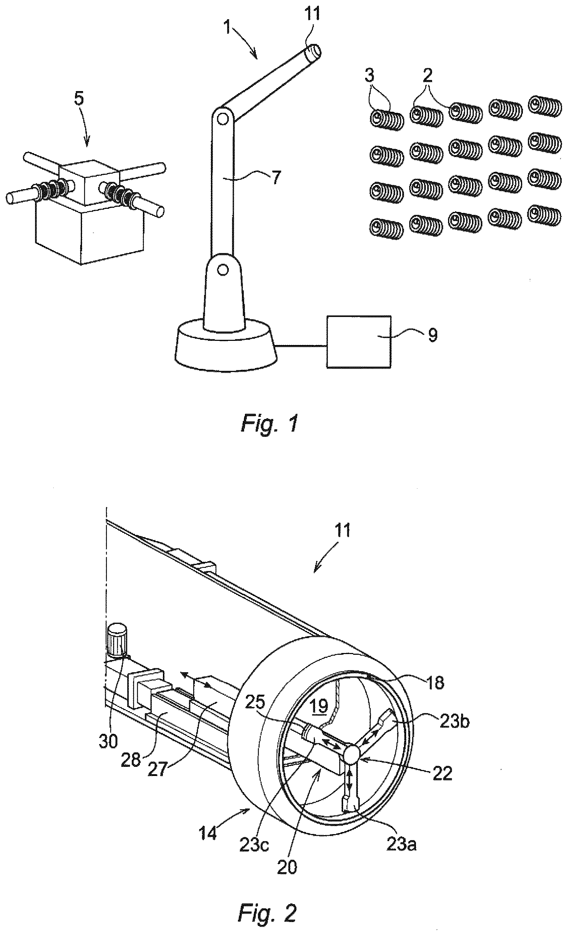

Figure 1 shows a device 1 for picking slitting tools according to an embodiment of the invention. The figure also shows a plurality of slitting tools 3 hung up on a plurality of hanging members 2 in a slitting tool storage. Each hanging member 2 is adapted to hold a plurality of slitting tools 3. In this example, the slitting tools are constituted by circular plates with a centre hole in the middle of the plate and passing through the slitting tools. For example, the slitting tools comprising steel cutters and spacers. However, the shape of the slitting tools may of course be varied greatly. The picking device 1 is arranged to automatically pick one of the slitting tools from the hanging member 2 and to move the picked slitting tool to an interim station/turnstile 5, comprising a number of elongated elements intended to receive the slitting tools. Of course, the picking device can be programmed to move the slitting tool to any place in the working range of the picking device.

The picking device 1 comprises a robot 7, the movements of which are controlled by a computer program. The robot 7 is arranged movable between a first place, in this example the slitting tool storage including the hanging members 2, and a second place, in this example the turnstile 5. The slitting tools are fetched by the picking device 1. The picking device further comprises a control unit 9 connected to the robot 7. The control unit 9 is arranged to control the movements of the robot based on a computer program. The picking device 1 further comprises a gripping unit 11 arranged for attracting the slitting tool to the gripping unit and then to hold the slitting tool when the robot moves the slitting tool to the interim station, or to some other position. The control unit 9 can also be arranged to control the gripping unit. The gripping unit 11 is mounted on the outer end of the robot 1. A robot working cycle includes the following steps: fetching a slitting tool from one of the hanging members 2 in the storing magazine, moving the gripping unit 11 and the slitting tool to the interim station/turnstile 5, detaching the slitting tool from the ripping unit, leaving the slitting tool at one of the elongated elements on the turnstile 5, and moving the empty gripping unit 11 back to the storing magazine.

Figure 2 shows an example of a gripping unit 11 in more details. The gripping unit 11 comprises an electromagnet 14 arranged to generate a magnetic field for attracting one of the slitting tools during picking of the slitting tool. The slitting tool to be picked includes a magnetizable material, which makes it possible for the electromagnet to attract the slitting tool. The electromagnet comprises a coil 38 having a number of turns. In this example, the control unit 9 is configured to generate a magnetizing current supplied to the electromagnet, and thereby to control the magnetic field generated by the electromagnet.

In this example, the electromagnet 14 is tubular and is provided with a hole 19 going through the centre of the electromagnet. The gripping unit is provided with a sensor 18 configured to sense when a slitting tool is in contact with the gripping unit. Accordingly, the sensor detects when a slitting tool has been attached to and detached from the electromagnet.

The gripping unit further comprises an article holder 20 arranged to take hold of a slitting tool and to move a detached slitting tool away from the electromagnet. The article holder 20 is arranged lineally movable relative the electromagnet along an axis through the centre hole 19 of the electromagnet. The article holder 20 comprises a chuck 22 for taking hold of the slitting tool and means for moving the slitting tool away from the electromagnet. The chuck 22 is arranged retractable and is opened up when a slitting tool is to be taken hold of. The chuck 22 is of the same type as a clamping chuck. The chuck 22 of the article holder is positioned in the centre hole 19 of the electromagnet. In this example, the chuck 22 has three legs 23a - c arranged in Y-form so that the legs extend radially outward from a centre-point of the chuck. However, in other embodiments, it is possible to have two or four legs. The legs 23a -c are arranged so that their lengths in a radial direction can be changed, and thereby the gripping diameter of the chuck can be varied. In this embodiment, the gripping diameter of the chuck, and accordingly the stroke length of the legs is varied depending on the size of the chuck. In this example, the outer end 25 of each of the legs 23a - c is designed in order to fit in the centre hole of a slitting tool and is provided with a recess or a hollow chafer adapted to hold the slitting tool safely. The article holder comprises an elongated beam 27 which is fixedly connected to the chuck 22 and arranged movable along a track 28 which is fixedly connected relative to the electromagnet 14. The movements of the article holder 14 are actuated by a motor 30.

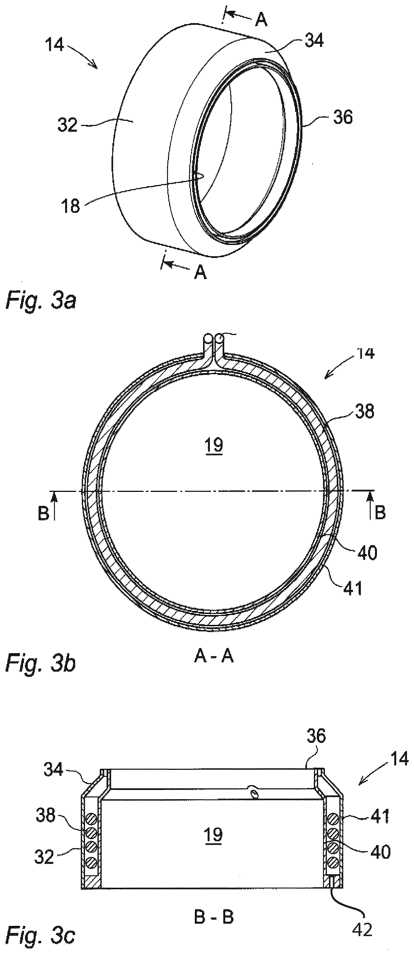

Figure 3a shows the electromagnet 14 in a perspective view, figure 3b shows the electromagnet 14 in a cross-section A-A through the electromagnet shown in figure 3a, and figure 3c shows a cross-section B-B through the electromagnet shown in figure 3b. The electromagnet comprises a first tubular part 32, which includes a coil 38 and a tapering part 34 having an outer end 36 adapted to be in contact with the slitting tool when it is picked. The outer end 36 of the tapering part has a shape and size which correspond to the shape and size of the slitting tool to be picked. The coil has a plurality of turns. The number of turns N of the coil may vary and is determined by several parameters as desired inductance and magnetic force, voltage and current accessible etc. To achieve a sufficient magnetization of the electromagnet to attract the slitting tools, the current fed to the coil should generate a magnetomotive force MMF in the coil of at least 15 At, and preferably, between 75 and 750 At. The magnetomotive force is defined as the product of the number of turns N in a coil and the current I in amperes:

$$MMF = N \times I$$

Suitably, the number of turns N of the coil 38 is between 50 and 500.

For example, the number of turns is 150 and the current supplied to the coil is 1 A. In this case, the MMF = 150 At.

The coil 38 is surrounded by a casing having a centre hole 19. The casing includes an inner wall 40 of a cylindrical shape and an outer wall 41 also of a cylindrical shape. The coil 38 is arranged in the space formed between the outer and inner walls of the casing. The electromagnet is arranged to attract the slitting tool and attach the slitting tool to the outer end 36 of the casing by generating a magnetic field. The distance between the outer and inner walls is reduced in the outer end 36, which is to be attached to the slitting tool. However, the outer and inner walls 41, 40 are not allowed to be in contact with each other in the end 36 in order to form a magnetic path between the walls and the slitting tool. The coil is provided with terminals 42 for connection to a cable supplying magnetizing current to the coil.

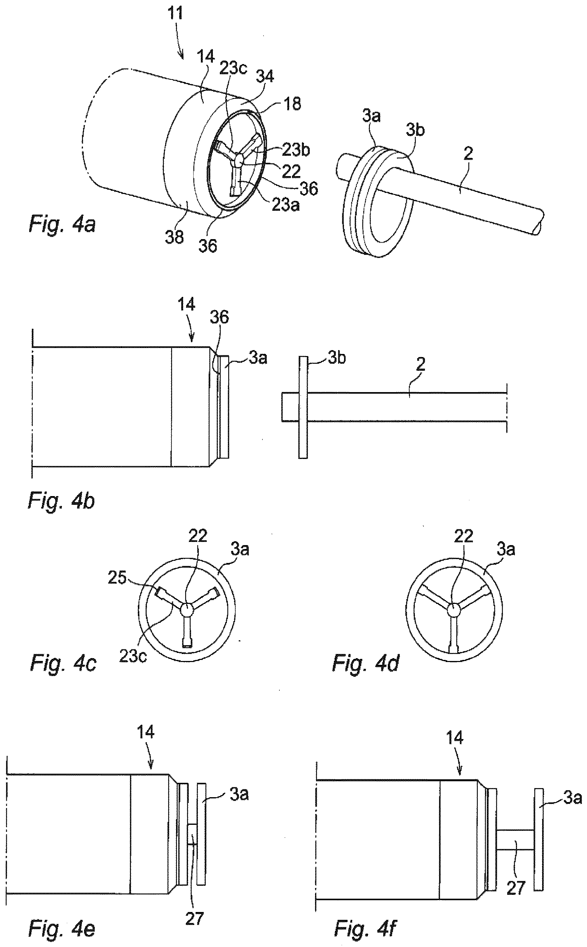

Figures 4a -4f show the steps of picking a slitting tool by means of the picking device. In a first step, as shown in figure 4a, the robot moves the gripping unit 11 towards the slitting tool 3a to be picked. The chuck 22 is retracted, which means that the legs of the chuck 22 are in a retracted position and that the chuck is located inside the electromagnet 14. The outer end 36 of the electromagnet 14 is moved into a position opposite to and close to the slitting tool 3a to be picked. When the electromagnet is close to the slitting tool 3a, a magnetizing pulse is supplied to the coil of the electromagnet so that it generates a magnetic field attracting the slitting tool 3a. The magnetic field attracts the slitting tool 3a and moves the slitting tool into contact with the casing of the electromagnet. The slitting tool becomes attached to the end 36 of the electromagnet, as shown in figure 4b. When the slitting tool has been attached to the electromagnet, the slitting tool is moved away from the hanging member 2. Since the magnetic field causes remanent magnetization of the gripping unit as well as the slitting tool, the slitting tool is still attached to the electromagnet after the magnetizing pulse has been ended. The robot moves the gripping unit with the attached slitting tool to the place where the slitting tool is to be placed, for example the turnstile 5.

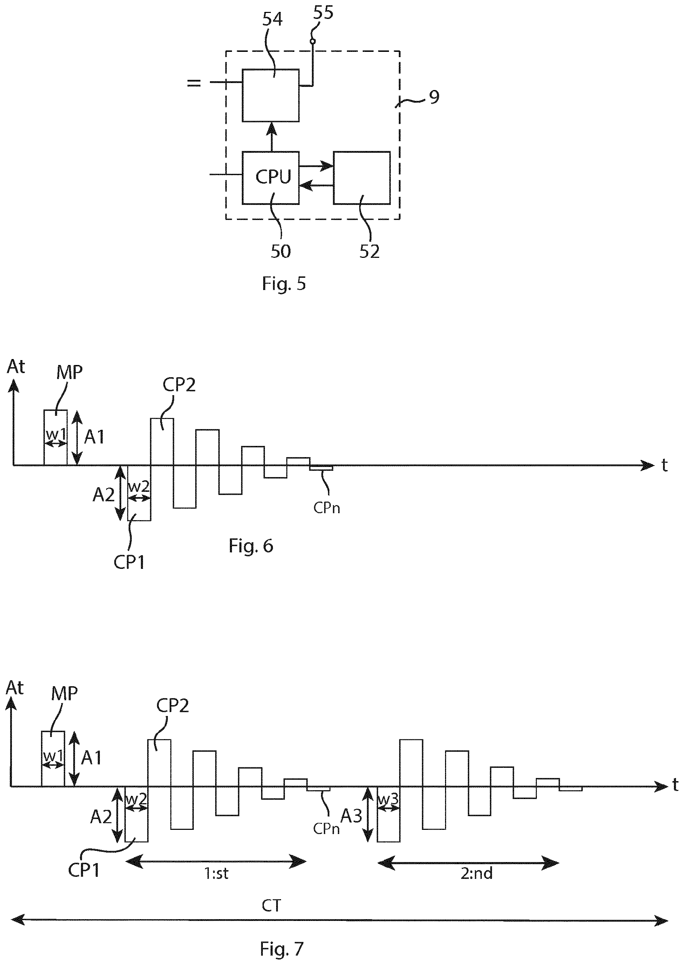

The slitting tool is detached from the electromagnet by means of a first demagnetization process. This is done by feeding the coil with a train of current pulses with changing polarity and gradually decreasing amplitude. The train of current pulses is supplied to the electromagnet to generate a variable magnetic field for demagnetizing the slitting tool and the electromagnet and accordingly detach the slitting tool from the electromagnet. After the demagnetization process there is no remaining magnetism in the slitting tool as will be described later. However, there may be some remaining magnetism in the electromagnet. The demagnetization process is described in more details with reference to the diagram shown in figure 6. During a last part of the demagnetization process, the article holder takes hold of the slitting tool, as shown in figures 4c-d. The article holder 20 is moved so that the chuck 22 is in a position which makes it possible for the chuck to take hold of the slitting tool, i.e. the chuck is moved into the centre hole of the slitting tool 3a, as shown in figure 4c. When the chuck 22 is positioned within the centre hole of the slitting tool the chuck is opened up and the arms 23a - c are moved radially outward towards the slitting tool, until they reach the inner diameter of the centre hole of the slitting tool, as shown in figure 4d. The recesses 25 of the outer ends of the arms 23a-c are fitted to the inner diameter of the centre hole of the slitting tool, and in that instant the slitting tool is centred relative the electromagnet and hold by the article holder.

When the demagnetization process has been completed and the article holder has taken hold of the slitting tool, the article holder 20 moves the slitting tool away from the electromagnet, as shown in figure 4e and 4f. The gripping unit leaves the slitting tool at the turnstile 5, and thereafter moves the empty gripping unit 11 back to the storing magazine.

According to the invention, a second demagnetization process is carried out by feeding the coil with a second train of current pulses with changing polarity and gradually decreasing amplitude to generate a second variable magnetic field for demagnetizing the electromagnet while moving the gripping unit back to the storing magazine to pick the next slitting tool. The second demagnetization process removes remaining magnetism in the electromagnet. The second demagnetization process is described in more details with reference to the diagram shown in figure 7.

Figure 5 shows a block diagram of a part of the control unit 9. The control unit 9 is configured to control the movements of the robot 7 and the movements of the article holder. The control unit 9 is further configured to control the magnetizing current supplied to the electromagnet 14. The control unit 9 includes all necessary hardware and software for performing traditional robot controller functionality. The hardware includes at least one central processing unit 50, and memory storage 52 for storing a control program for controlling the movements of the robot, the movements of the article holder, and for controlling the magnetizing current to the electromagnet. The central processing unit 50 receives input from the sensor 18, which detects when the slitting tool has been picked. The central processing unit may also receive information from other sensors, for example, sensors for detecting the position of the slitting tool before it is picked.

The control unit 9 further includes a current supply unit 54 configured to feed the coil 38 with current in dependence on instructions from the central processing unit 50. The current supply unit 54 is connected to a power source providing direct current (DC), for example 24 V. Output terminals 55 of the current supply unit 54 are electrically connected to the terminals 42 of the coil 38 of the electromagnet. The current supply unit 54 comprises hardware for converting the direct current into current pulses to the electromagnet in dependence on the control program run by the CPU.

In the following the magnetization and demagnetization procedures are described using a typical combination of parameters for a typical slitting tool, as an example. However, the procedure is applicable for other slitting tool designs, combinations of geometries and coils etc. making the necessary adjustments of parameters.

Figure 6 shows an example of the current supplied to the coil of the electromagnet during picking of a slitting tool and during the first demagnetization process. The diagram shows the current supplied to the coil multiplied with the number of turns (At) versus the time (t). The magnetic field B generated by the magnetizing current is essentially proportional to the supplied current before saturation of the iron core occurs.

During a picking phase, which begins when the electromagnet is close to the slitting tool, a magnetizing pulse MP is supplied to the electromagnet so that it generates a magnetic field attracting the slitting tool 3a. The width of the magnetizing pulse depends on the type of slitting tool. Preferably, the width w1 of the magnetizing pulse is at least 50 ms in order to overcome the skin effect of the gripping unit. If the slitting tool is an unlaminated iron tool, the current pulse must be longer than typically 100 ms in order to completely overcome the skin effect of the unlaminated iron electromagnet and for the magnetic field to penetrate the bulk material of the slitting tool and to achieve the desired magnetic force. The amplitude A1 of the magnetizing pulse depends on the number of turns of the coil and the current supplied to the coil. The coil is preferably fed with a current corresponding at least 15 At, and preferably between 75 and 750 At, during generation of the magnetizing pulse MP. For example, the amplitude of the magnetizing pulse MP is 150 At if the coil has 150 turns and is fed by a current of 1 A.

When the electromagnet approaches the slitting tool, it will attract the slitting tool from a few mm distance. The distance depends on the current applied and the mass of the slitting tool. For example, the coil has 150 turns and 2 ohms, and is fed by a current typically 1-5 A (voltage typically 2-10 V). The holding force will in this case be typically 1000 -5000 N. When the slitting tool has contacted the electromagnet, the current can be switched off. The remanent magnetic field results in a holding force high enough for keeping the slitting tool securely attached to the electromagnet.

In order to release the slitting tool, a first demagnetization process is performed so that the slitting tool is detached from the electromagnet and demagnetized. During the demagnetization process, the coil is fed with a train of current pulses CP1, CP2 etc. with changing polarity and gradually decreasing amplitude so that the coil generates a variable magnetic field. A first current pulse CP1 in the first train should have a polarity opposite to the polarity of the magnetizing pulse MP. Preferably, the amplitude A2 of the first current pulse CP1 is approximately the same as the amplitude A2 of the magnetizing pulse MP. The next pulse should have reversed polarity and the same or a slightly lower amplitude, typically 10-30 % lower amplitude, than the preceding pulse. The next pulse should be of reversed polarity compared to the preceding pulse and so on. The last pulse CPn in the pulse train must be small enough in order to achieve a good enough demagnetization. Suitably, the amplitude of the last pulse CPn in the first train of current pulses is at least 20 % lower than the amplitude of the first pulse CP1 in the first train. Preferably the amplitude of the last pulse in the first train of current pulses is at least 10 % lower than the amplitude of the first pulse in the first train. Most preferably the amplitude of the last pulse in the first train of current pulses is at least 5 % lower than the amplitude of the first pulse in the first train to achieve an good demagnetization.

Preferably, the amplitude of the first current pulse CP1 in the first train differs less than 20% from the amplitude of the magnetizing pulse. For example, the amplitude of the following pulses in the first train is between 5 and 50% lower than the amplitude of the preceding pulse.

Suitably, the width w2 of the current pulses CP1, CP2 is the same as the width w1 of the magnetizing pulse MP.

Test has shown that it can be advantageous if the last pulse in the pulse train has the same polarity as the first pulse in the pulse train.

Alternatively, the train of pulses comprises a plurality of pair of pulses, wherein the two pulses in each pair of pulses have opposite polarity, but the same amplitude. The amplitude of the following pair of pulses in the train is lower, for example between 5 and 50% lower, than the amplitude of the preceding pair of pulse. For example, if the pulse train has 8 pair of pulses, and the width of the pulses is 70 ms, the time period of the first demagnetization process is about 1.1 s.

The width w2 (or length) of each current pulse CP1, CP2 should be at least 50 ms. Preferably, the length of each of the current pulses is at least 100 ms, corresponding to a frequency less than 5 Hz and preferably less than or equal to 3 Hz. The reason for this is the skin effect mentioned above and is furthermore due to the high inductance, typically 0.7 H, of the electromagnet which is magnetically short circuited by the slitting tool. Otherwise very high voltages would be required for feeding the desired current through the coil at higher frequency.

A feedback electronic control circuit aims at controlling the current amplitude to the desired levels for the pulse train. Due to the high inductance of the electromagnet with a slitting tool attached to it and the limited voltage accessible the rise time of the pulses will be relatively long. Thus, it is important that the total pulse width is long enough for the magnetic field to fully penetrate the core of the iron material.

To reduce the cycle time, the number of pulses in the first train is less than 30. Preferably, the number of pulses in the first train is less than 20. To achieve a sufficient demagnetizing of the electromagnet and the slitting tools, the number of pulses in the first train should preferably be at least 4, and most preferably at least 8.

The frequency, the rate of decrease of the amplitude, and number of pulses will be a compromise between the total time for the demagnetization process and the demagnetization result. Many pulses and low frequency will yield the best demagnetization result but will also slow down the robot performing cycle. In practice typically 10 pulses and about 1 s total demagnetization process has shown to give satisfactory results even if a longer demagnetizing time sometimes may be preferred.

At the end of the demagnetization process, the slitting tool will be loose and easily released from the electromagnet. The article holder takes hold of the slitting tool during the first demagnetization process and starts moving the slitting tool away from the electromagnet as soon as the slitting tool has been detached from the electromagnet and the first demagnetization process has been finished.

Most of the remanent magnetization has been removed by the first demagnetization process but there may be some small remanence left as will be described below. How much will, among other factors, depend on the design and length of the demagnetization process. A complete demagnetization of the electromagnet and the slitting tool is very important in order to avoid slitting tools to cling together and the parts to attract ferroparticles.

For the slitting tool this issue is resolved by merely lifting off the slitting tool from the electromagnet. A large, thin, flat plate magnetized perpendicularly to the plane has, due to its geometry, a so-called demagnetization factor = 1. This means that any small remanent field in the slitting tool will effectively more or less vanish when the slitting tool is removed from the electromagnet. The demagnetization factor has changed from zero for the closed magnetic circuit, where the slitting tool closes the active airgap of the electromagnet, to close to 1 for an isolated thin slitting tool. Here we have utilized a physical principle in an innovative way to remove the possible small residues of magnetism from the slitting tool.

The slitting tool and electromagnet are not perfectly flat and accordingly the mechanical contact between the slitting tool and the electromagnet will not be uniform. There will be surface contact in some areas and thin air gaps in other areas. The most magnetic flux will pass through the direct contact areas and less through the thin airgap areas. When the slitting tool in the first phase is pressed to the electromagnet by the strong magnetic force, the slitting tool may flex slightly, and in some cases have surface contact along most of the area. However, when demagnetizing, the slitting tool will spring back at lower fields/lower forces during the demagnetization process and lose contact in some areas. As a result of this chain of events, after demagnetization the small remanent flux left will be unevenly distributed along the perimeter of the electromagnet. This has been observed in practice and it is, due to the described circumstances, very difficult to completely demagnetize the electromagnet over the complete area at the first demagnetization process, even if the cycle is perfectly designed. There is a risk that the electromagnet may attract ferroparticles to the areas having small remaining flux. This issue is resolved by a second demagnetization process after the slitting tool has been removed.

The electromagnet, due to its geometry, has a demagnetization factor larger than zero but less than 1. As a result of this, a small remanent field will decrease somewhat when the slitting tool is removed, but not vanish completely.

Figure 7 shows another example of the current/ampere turns supplied to the coil of the electromagnet during picking of a slitting tool and during a first and a second demagnetization process. In order to completely remove all traces of remanent magnetic field from the electromagnet, a second demagnetization process is performed after the slitting tool has been removed from the electromagnet and left to the turnstile or some other position. During the second magnetizing process, the coil is fed with a second train of current pulses with changing polarity and gradually decreasing amplitude to generate a second variable magnetic field for demagnetizing the electromagnet while moving the gripping unit to the next slitting tool to be picked. When the slitting tool has been removed the magnetic circuit has a very uniform airgap and accordingly the magnetic reluctance is exactly equal along the whole perimeter of the electromagnet. This means that the magnetic flux produced by current through the coil will be exactly evenly distributed over the air gap along the whole perimeter.

Suitably, the second pulse train during the second demagnetization process, have the same parameters as the first pulse train, such as the same amplitudes and the same width. Preferably, the width w3 of the pulses in the second train is at least 50 ms, and preferably at least 100 ms. The current fed to the coil corresponds to at least 15 At during generation of the first pulse in the second train. Preferably, the number of pulses in the second train is at least 10, and most preferably at least 15. It is mostly sufficient that the number of pulses in the second train is less than 30.

Since there now is a large airgap, the magnetic field amplitude will be very much smaller than for the first demagnetization process and the inductance will, as a consequence, be much smaller. However, the remanent flux is very small and the amplitude of the magnetic field is large enough to completely demagnetize the electromagnet evenly along the complete perimeter. The frequency of the pulse train must, as before, still be low due to the skin effect in the unlaminated iron material even though the inductance has been greatly reduced.

After the first and second demagnetization processes have been performed as described above, the electromagnet as well as the slitting tool will be fully demagnetized and will not attract ferroparticles.

The time length of the first demagnetization will directly influence the time length of the robot performing cycle. Therefore, it is a great advantage to keep the first demagnetization process as short as possible even if the demagnetization result is not perfect at this stage. As has been shown above, small remaining flux is completely removed by the second demagnetization process. It is important to point out that the time length of the second demagnetization process will not influence the time length of the robot performing cycle since it takes place in the mean time when the robot is returning to pick the next slitting tool. The second demagnetization can thus be made longer if desirable without affecting the robot performance. The concept of two short demagnetization processes is thus in all aspects advantageous compared to using one single longer demagnetization process.

The present invention is not limited to the embodiments disclosed but may be varied and modified within the scope of the following claims.

In the above example, the pulses in the pulse train are rectangular. However, it is also possible to have other shapes, such as a sinus shape or a triangular shape.

**Claims**

1. A device (1) for picking slitting tools (3), wherein the device comprises a robot (7) arranged movable between a first place and a second place, and a gripping unit (11) mounted on the robot and adapted to pick a slitting tool at the first place and to leave the slitting tool at the second place, wherein the robot is arranged to move the gripping unit (11) holding the slitting tool to the second place and to move the empty gripping tool back to the first place, and wherein the gripping unit includes an electromagnet (14) having a coil (38) arranged to generate a magnetic field, and a current supply unit (54) configured to feed the coil with a magnetizing pulse (MP) to generate a magnetic field for attracting the slitting tool during picking of the slitting tool and to generate a first variable magnetic field for demagnetizing the slitting tool and the electromagnet when the slitting tool is attached to the electromagnet, **characterized in that** the current supply unit (54) is configured to feed the coil (38) with a first train of current pulses (CP1, CP2, CPn) with changing polarity and generally gradually decreasing amplitude to generate the first variable magnetic field for demagnetizing the slitting tool and the electromagnet, wherein a first current pulse (CP1) in the first train has a polarity opposite to the polarity of the magnetizing pulse (MP), and the current supply unit (54) is configured to feed the coil (38) with a second train of current pulses with changing polarity and generally gradually decreasing amplitude to generate a second variable magnetic field for demagnetization of the electromagnet (14) after the slitting tool has been removed from the gripping unit and left at the second place, and while the robot is moving the empty gripping unit (11) back to the first place.

2. The device according to claim 1, wherein the amplitude (A2) of the first current pulse in the first train differs less than 20% from the amplitude (A1) of the magnetizing pulse.

3. The device according to claim 1 or 2, wherein the width (w1) of the magnetizing pulse and the width (w2) of the current pulses in the first train are at least 50 ms, and preferably at least 100 ms.

4. The device according to any of the previous claims, wherein the number of pulses in the first train is less than 30, and preferably less than 20.

5. The device according to any of the previous claims, wherein the number of pulses in the first train is at least 4, and preferably at least 8.

6. The device according to any of the previous claims, wherein the current supply unit (54) is configured to feed the coil (38) with a current corresponding to at least 15 At during generation of the magnetizing pulse and the first current pulse in the first demagnetizing train, and preferably between 75 and 750 At.

7. The device according to any of the previous claims, wherein the amplitude of the last pulse (CPn) in the first train of current pulses is at least 20 % lower than the amplitude of the first pulse (CP1) in the first train, preferably the amplitude of the last pulse in the first train of current pulses is at least 10 % lower than the amplitude of the first pulse in the first train, and most preferably the amplitude of the last pulse in the first train of current pulses is at least 5 % lower than the amplitude of the first pulse in the first train.

8. The device according to any of the previous claims, wherein the gripping unit (11) comprises an article holder (20) arranged to take hold of the slitting tool and to move the detached slitting tool away from the electromagnet, and the article holder (20) is arranged to take hold of the slitting tool during generation of the first pulse train.

9. A method for controlling a device (1) for picking slitting tools, wherein the device comprises a gripping unit including an electromagnet (14) having a coil, and the method comprises:

- feeding the coil with at least one magnetizing pulse to generate a magnetic field for attracting a slitting tool, and
- picking the slitting tool at a first place using the gripping unit, **characterized in that** the method comprises:

- feeding the coil with a train of current pulses with changing polarity and generally gradually decreasing amplitude to generate a first variable magnetic field for demagnetizing the slitting tool and the electromagnet when the slitting tool is attached to the electromagnet, wherein a first current pulse in the first train has a polarity opposite to the polarity of the magnetizing pulse,
- moving the slitting tool to a second place,
- removing the slitting tool from the gripping unit,
- leaving the slitting tool at the second place,
- feeding the coil with a second train of current pulses with changing polarity and generally gradually decreasing amplitude to generate a second variable magnetic field for demagnetizing the electromagnet after the slitting tool has been removed from the gripping unit and left at the second place and while moving the empty gripping unit back to the first place.

10. The method according to claim 9, wherein the amplitude of the first current pulse in the first train differs less than 20% from the amplitude of the magnetizing pulse.

11. The method according to claim 9 or 10, wherein the coil is fed with a current corresponding to at least 15 At during generation of the magnetizing pulse and the first pulse in the first train, and preferably between 75 and 750 At.

12. The method according to any of the claims 9 - 11, wherein the gripping unit comprises an article holder (20) arranged to take hold of the slitting tool and to move the detached slitting tool away from the electromagnet, and the method comprises taking hold of the slitting tool during generation of the first train of current pulses.

## Patentansprüche

1. Vorrichtung (1) zum Kommissionieren von Längsschneidwerkzeugen (3), wobei die Vorrichtung einen Roboter (7) umfasst, der bewegbar zwischen einer ersten Stelle und einer zweiten Stelle angeordnet ist, und eine Greifeinheit (11), die auf dem Roboter montiert und dazu angepasst ist, ein Längsschneidwerkzeug an der ersten Stelle zu kommissionieren und das Längsschneidwerkzeug an der zweiten Stelle zu hinterlassen, wobei der Roboter dazu eingerichtet ist, die Greifeinheit (11), die das Längsschneidwerkzeug hält, zu der zweiten Stelle zu bewegen und das leere Greifwerkzeug zurück zu der ersten Stelle zu bewegen, und wobei die Greifeinheit einen Elektromagnet (14) beinhaltet, der eine Spule (38) aufweist, die eingerichtet ist, um ein Magnetfeld zu erzeugen, und eine Stromzufuhreinheit (54), die dazu konfiguriert ist, der Spule einen Magnetisierungsimpuls (MP) zuzuführen, um ein Magnetfeld zum Anziehen des Längsschneidwerkzeugs während des Kommissionierens des Längsschneidwerkzeugs zu erzeugen, und ein erstes variables Magnetfeld zum Entmagnetisieren des Längsschneidwerkzeugs und des Elektromagnets zu erzeugen, wenn das Längsschneidwerkzeug an dem Elektromagnet haftet, **dadurch gekennzeichnet, dass** die Stromzufuhreinheit (54) dazu konfiguriert ist, der Spule (38) eine erste Folge von Stromimpulsen (CP1, CP2, Cpn) mit wechselnder Polarität zuzuführen und generell allmählich die Amplitude zu verringern, um das erste variable Magnetfeld zum Entmagnetisieren des Längsschneidwerkzeugs und des Elektromagnets zu erzeugen, wobei ein erster Stromimpuls (CP1) in der ersten Folge eine Polarität aufweist, die der Polarität des Magnetisierungsimpulses (MP) entgegengesetzt ist, und die Stromzufuhreinheit (54) dazu konfiguriert ist, der Spule (38) eine zweite Folge von Stromimpulsen mit wechselnder Polarität zuzuführen und generell allmählich die Amplitude zu verringern, um ein zweites variables Magnetfeld zur Entmagnetisierung des Elektromagnets (14) zu erzeugen, nachdem das Längsschneidwerkzeug aus der Greifeinheit entfernt und an der zweiten Stelle hinterlassen wurde, und während der Roboter die leere Greifeinheit (11) zu der ersten Stelle zurück bewegt.

2. Vorrichtung nach Anspruch 1, wobei sich die Amplitude (A2) des ersten Stromimpulses in der ersten Folge um weniger als 20 % von der Amplitude (A1) des Magnetisierungsimpulses unterscheidet.

3.  Vorrichtung nach Anspruch 1 oder 2, wobei die Breite (w1) des Magnetisierungsimpulses und die Breite (w2) des Stromimpulses in der ersten Folge mindestens 50 ms und bevorzugt mindestens 100 ms betragen.

4.  Vorrichtung nach einem der vorstehenden Ansprüche, wobei die Anzahl von Impulsen in der ersten Folge geringer ist als 30 und bevorzugt geringer als 20.

5.  Vorrichtung nach einem der vorstehenden Ansprüche, wobei die Anzahl von Impulsen in der ersten Folge mindestens 4 und bevorzugt mindestens 8 beträgt.

6.  Vorrichtung nach einem der vorstehenden Ansprüche, wobei die Stromzufuhreinheit (54) dazu konfiguriert ist, der Spule (38) einen Strom zuzuführen, der mindestens 15 AW während der Erzeugung des Magnetisierungsimpulses beträgt, und der erste Stromimpuls in der ersten Entmagnetisierungsfolge und bevorzugt zwischen 75 und 750 AW beträgt.

7.  Vorrichtung nach einem der vorstehenden Ansprüche, wobei die Amplitude des letzten Impulses (Cpn) in der ersten Folge von Stromimpulsen mindestens 20 % geringer ist als die Amplitude des ersten Impulses (CP1) in der ersten Folge, die Amplitude des letzten Impulses in der ersten Folge von Stromimpulsen bevorzugt um mindestens 10 % geringer ist als die Amplitude des ersten Impulses in der ersten Folge, und am besten die Amplitude des letzten Impulses in der ersten Folge von Stromimpulsen um mindestens 5 % geringer ist als die Amplitude des ersten Impulses in der ersten Folge.

8.  Vorrichtung nach einem der vorstehenden Ansprüche, wobei die Greifeinheit (11) einen Artikelhalter (20) umfasst, der eingerichtet ist, um das Längsschneidwerkzeug zu ergreifen und das gelöste Längsschneidwerkzeug von dem Elektromagnet weg zu bewegen, und der Artikelhalter (20) eingerichtet ist, um das Längsschneidwerkzeug während der Erzeugung und der ersten Impulsfolge zu ergreifen.

9.  Verfahren zum Steuern einer Vorrichtung (1) zum Kommissionieren von Längsschneidwerkzeugen, wobei die Vorrichtung eine Greifeinheit umfasst, die einen Elektromagnet (14) beinhaltet, der eine Spule aufweist, und das Verfahren Folgendes umfasst:

    - Zuführen mindestens eines Magnetisierungsimpulses zu der Spule, um ein Magnetfeld zum Anziehen eines Längsschneidwerkzeugs zu erzeugen, und
- Kommissionieren des Längsschneidwerkzeugs an einer ersten Stelle unter Verwendung der Greifeinheit, **dadurch gekennzeichnet, dass** das Verfahren Folgendes umfasst:

    - Zuführen einer Folge von Stromimpulsen mit wechselnder Polarität und generell allmählich abnehmender Amplitude zu der Spule, um ein erstes variables Magnetfeld zum Entmagnetisieren des Längsschneidwerkzeugs und des Elektromagnets zu erzeugen, wenn das Längsschneidwerkzeug an dem Elektromagnet haftet, wobei ein erster Stromimpuls in der ersten Folge eine Polarität aufweist, die der Polarität des Magnetisierungsimpulses entgegengesetzt ist,
    - Bewegen des Längsschneidwerkzeugs zu einer zweiten Stelle,
    - Entfernen des Längsschneidwerkzeugs von der Greifeinheit,
    - Hinterlassen des Längsschneidwerkzeugs an der zweiten Stelle,
    - Zuführen einer zweiten Folge von Stromimpulsen mit wechselnder Polarität und generell allmählich abnehmender Amplitude zu der Spule, um ein zweites variables Magnetfeld zum Entmagnetisieren des Elektromagnets zu erzeugen, nachdem das Längsschneidwerkzeug von der Greifeinheit entfernt und an der zweiten Stelle hinterlassen wurde, und während die leere Greifeinheit zu der ersten Stelle zurück bewegt wird.

10. Verfahren nach Anspruch 9, wobei sich die Amplitude des ersten Stromimpulses in der ersten Folge um weniger als 20 % von der Amplitude des Magnetisierungsimpulses unterscheidet.

11. Verfahren nach Anspruch 9 oder 10, wobei der Spule während der Erzeugung des Magnetisierungsimpulses und des ersten Impulses in der ersten Folge ein Strom zugeführt wird, der mindestens 15 AW und bevorzugt zwischen 75 und 750 AW entspricht.

12. Verfahren nach einem der Ansprüche 9-11, wobei die Greifeinheit einen Artikelhalter (20) umfasst, der eingerichtet ist, um das Längsschneidwerkzeug zu ergreifen und das gelöste Längsschneidwerkzeug von dem Elektromagnet weg zu bewegen, und wobei das Verfahren das Ergreifen des Längsschneidwerkzeugs während der Erzeugung der ersten Impulsfolge umfasst.

**Revendications**

1. Dispositif (1) permettant de saisir des outils de cisaillage (3), dans lequel le dispositif comprend un robot (7) disposé de façon déplaçable entre un premier emplacement et un deuxième emplacement, et une unité de préhension (11) montée sur le robot et adaptée pour saisir l'outil de cisaillage au premier emplacement et pour déposer l'outil de cisaillage au deuxième emplacement, dans lequel le robot est conçu pour déplacer l'unité de préhension (11) tenant l'outil de cisaillage vers le deuxième emplacement et pour renvoyer l'outil de préhension vide vers le premier emplacement, et

   dans lequel l'unité de préhension inclut un électroaimant (14) comportant une bobine (38) conçue pour générer un champ magnétique, et une unité d'alimentation en courant (54) configurée pour alimenter la bobine avec une impulsion de magnétisation (MP) pour générer un champ magnétique afin d'attirer l'outil de cisaillage pendant la saisie de l'outil de cisaillage et pour générer un premier champ magnétique variable afin de démagnétiser l'outil de cisaillage et l'électroaimant lorsque l'outil de cisaillage est fixé à l'électroaimant, **caractérisé en ce que** l'unité d'alimentation en courant (54) est configurée pour alimenter la bobine (38) avec un premier train d'impulsions de courant (CP1, CP2, CPn) avec une polarité alternée et une amplitude diminuant généralement progressivement pour générer le premier champ magnétique variable afin de démagnétiser l'outil de cisaillage et l'électroaimant, dans lequel une première impulsion de courant (CP1) dans le premier train présente une polarité opposée à la polarité de l'impulsion de magnétisation (MP), et l'unité d'alimentation en courant (54) est configurée pour alimenter la bobine (38) avec un deuxième train d'impulsions de courant avec une polarité alternée et une amplitude diminuant généralement progressivement afin de générer un deuxième champ magnétique variable pour la démagnétisation de l'électroaimant (14) une fois que l'outil de cisaillage a été retiré de l'unité de préhension et déposé au deuxième emplacement, et tandis que le robot renvoie l'unité de préhension (11) vide vers le premier emplacement.

2. Dispositif selon la revendication 1, dans lequel l'amplitude (A2) de la première impulsion de courant dans le premier train diffère de moins de 20 % de l'amplitude (A1) de l'impulsion de magnétisation.

3. Dispositif selon la revendication 1 ou 2, dans lequel la largeur (w1) de l'impulsion de magnétisation et la largeur (w2) des impulsions de courant dans le premier train sont d'au moins 50 ms, et de préférence d'au moins 100 ms.

4. Dispositif selon l'une quelconque des revendications précédentes, dans lequel le nombre d'impulsions dans le premier train est inférieur à 30, et de préférence inférieur à 20.

5. Dispositif selon l'une quelconque des revendications précédentes, dans lequel le nombre d'impulsions dans le premier train est d'au moins 4, et de préférence d'au moins 8.

6. Dispositif selon l'une quelconque des revendications précédentes, dans lequel l'unité d'alimentation en courant (54) est configurée pour alimenter la bobine (38) avec un courant correspondant à au moins 15 At pendant la génération de l'impulsion de magnétisation et de la première impulsion de courant dans le premier train de démagnétisation, et de préférence entre 75 et 750 At.

7. Dispositif selon l'une quelconque des revendications précédentes, dans lequel l'amplitude de la dernière impulsion (CPn) dans le premier train d'impulsions de courant est inférieure d'au moins 20 % à l'amplitude de la première impulsion (CP1) dans le premier train, préférentiellement l'amplitude de la dernière impulsion dans le premier train d'impulsions de courant est inférieure d'au moins 10 % à l'amplitude de la première impulsion dans le premier train et, plus préférentiellement, l'amplitude de la dernière impulsion dans le premier train d'impulsions de courant est inférieure d'au moins 5 % à l'amplitude de la première impulsion dans le premier train.

8. Dispositif selon l'une quelconque des revendications précédentes, dans lequel l'unité de préhension (11) comprend un support d'article (20) conçu pour s'emparer de l'outil de cisaillage et pour déplacer l'outil de cisaillage détaché à distance de l'électroaimant, et le support d'article (20) est conçu pour s'emparer de l'outil de cisaillage pendant la génération du premier train d'impulsions.

9. Procédé de commande d'un dispositif (1) destiné à saisir des outils de cisaillage, dans lequel le dispositif comprend une unité de préhension incluant un électroaimant (14) comportant une bobine, et le procédé comprend :

   - l'alimentation de la bobine avec au moins une impulsion de magnétisation pour générer un champ magnétique afin d'attirer un outil de cisaillage, et
   - la saisie de l'outil de cisaillage à un premier emplacement à l'aide de l'unité de préhension, **caractérisé en ce que** le procédé comprend :

   - l'alimentation de la bobine avec un train d'impulsions de courant avec une polarité alternée et une amplitude diminuant généralement progressivement pour générer un premier champ magnétique variable afin de démagnétiser l'outil de cisaillage et l'électroaimant lorsque l'outil de cisaillage est fixé à l'électroaimant, dans lequel une première impulsion de courant dans le premier train présente une polarité opposée à la polarité de l'impulsion de magnétisation,

- le déplacement de l'outil de cisaillage vers un deuxième emplacement,

- le retrait de l'outil de cisaillage par rapport à l'unité de préhension,

- le dépôt de l'outil de cisaillage au deuxième emplacement,

- l'alimentation de la bobine avec un deuxième train d'impulsions de courant avec une polarité alternée et une amplitude diminuant généralement progressivement afin de générer un deuxième champ magnétique variable pour la démagnétisation de l'électroaimant une fois que l'outil de cisaillage a été retiré de l'unité de préhension et déposé au deuxième emplacement et pendant le renvoi de l'unité de préhension vide vers le premier emplacement.

10. Procédé selon la revendication 9, dans lequel l'amplitude de la première impulsion de courant dans le premier train diffère de moins de 20 % de l'amplitude de l'impulsion de magnétisation.

11. Procédé selon la revendication 9 ou 10, dans lequel la bobine est alimentée avec un courant correspondant à au moins 15 At pendant la génération de l'impulsion de magnétisation et de la première impulsion de courant dans le premier train, et de préférence entre 75 et 750 At.

12. Procédé selon l'une quelconque des revendications 9 à 11, dans lequel l'unité de préhension comprend un support d'article (20) conçu pour s'emparer de l'outil de cisaillage et pour déplacer l'outil de cisaillage détaché à distance de l'électroaimant, et le procédé comprend le fait de s'emparer de l'outil de cisaillage pendant la génération du premier train d'impulsions de courant.

Fig. 1

Fig. 2

14

34

32

18

A

A

*Fig. 3a*

14

38

19

B — B

40

41

*Fig. 3b*

A - A

36

34

14

38

41

32

40

19

42

*Fig. 3c*

B - B

Fig. 4a

Fig. 4b

Fig. 4c

Fig. 4d

Fig. 4e

Fig. 4f

Fig. 5

Fig. 6

Fig. 7

**REFERENCES CITED IN THE DESCRIPTION**

**Patent documents cited in the description**

- WO 2004098839 A
- EP 2193890 A